# FASCICULE DE BREVET EUROPEEN

(11) **EP 3 118 423 B1**
(45) Date de publication et mention de la délivrance du brevet: **07.03.2018**
(21) Numéro de dépôt: 16177541.6
(22) Date de dépôt: 01.07.2016
(51) Int. Cl.: F01D 25/02, F02C 7/047, F04D 29/58

(54) **BEC DE SÉPARATION DE COMPRESSEUR BASSE PRESSION DE TURBOMACHINE AXIALE AVEC CONDUIT ANNULAIRE DE DÉGIVRAGE**
STRÖMUNGSTEILER EINES NIEDERDRUCKKOMPRESSORS EINER AXIALEN TURBOMASCHINE MIT RINGFÖRMIGER ENTEISUNGSLEITUNG
FLOW SPLITTER FOR LOW PRESSURE COMPRESSOR OF AXIAL TURBOMACHINE WITH DE-ICING ANNULAR DUCT

(30) Priorité: 17.07.2015 BE 201505462
(43) Date de publication de la demande: 18.01.2017
(73) Titulaire: Safran Aero Boosters SA, 4041 Herstal (BE)
(72) Inventeur: CORTEQUISSE, Jean-François, 3870 Heers (BE)
(74) Mandataire: Lecomte & Partners

(56) Documents cités:
- US-A1- 2009 152 401
- US-A1- 2010 236 213
- US-A1- 2013 084 170
- US-A1- 2013 180 227

## Description

### Domaine technique

L'invention a trait au domaine des turbomachines axiales. Plus particulièrement l'invention a trait à un bec de séparation de compresseur basse pression de turbomachine axiale comprenant un conduit annulaire de dégivrage. L'invention a également trait à un compresseur basse pression.

### Technique antérieure

Un bec de séparation de compresseur basse pression de turbomachine d'aéronef comprend un bord de séparation qui est soumis en vol à une accumulation de glace. Cette accumulation de glace est due aux conditions de vol en particulier de la température en haute altitude. Des morceaux de glace se détachant du bord de séparation peuvent endommager la turbomachine en s'engouffrant dans le compresseur, la glace accumulée peut par ailleurs réduire le rendement de la turbomachine. Il est connu pour pallier ce phénomène d'équiper le bec de séparation de moyens de dégivrage par circulation d'air chaud dans le bec de circulation.

Le document de brevet publié EP 0 918 150 A1 divulgue un bec de séparation d'une turbomachine comprenant une enveloppe annulaire formant une cavité annulaire et un bord de séparation. Le bec comprend un conduit annulaire situé dans la cavité. Le conduit est relié à un tuyau d'alimentation en air chaud et comprend des orifices à travers lesquelles l'air chaud peut diffuser dans la cavité pour dégivrer le bord de séparation. Le conduit comprend une entrée d'air avec une liaison à rotule au tuyau d'alimentation. Il comprend, en outre, des moyens de fixation rigide à l'enveloppe. L'enseignement est intéressant en ce que la liaison à rotule à l'entrée du conduit est souple ce qui favorise sa robustesse en cas de dilatation du conduit et des contraintes mécaniques associées. La liaison rigide du conduit annulaire à l'enveloppe génère cependant des risques de rupture du conduit.

Le document EP2578814 A2 divulgue également un bec de séparation d'une turbomachine.

### Résumé de l'invention

### Problème technique

L'invention a pour objectif de proposer une solution palliant au moins un des inconvénients de l'état de la technique, en particulier de l'état de la technique susmentionné. Plus particulièrement, l'invention a pour objectif de faciliter la réalisation d'un bec de séparation pour compresseur basse pression de turbomachine.

### Solution technique

L'invention a pour objet un bec de séparation de turbomachine axiale, notamment de compresseur, tel que défini dans la revendication 1, ledit bec comprenant : une enveloppe annulaire formant une cavité annulaire et un bord de séparation circulaire d'un flux d'air de la turbomachine ; un conduit annulaire comportant une première zone et disposé dans la cavité annulaire, ledit conduit étant configuré pour dégivrer le bord de séparation par circulation d'air chaud dans la cavité, ledit conduit comprenant une entrée d'air destinée à être branchée à un tuyau d'alimentation en air chaud de la turbomachine ; remarquable en ce que le conduit est lié à l'enveloppe uniquement dans une deuxième zone; diamétralement opposée à l'entrée d'air, et éventuellement au niveau de l'entrée d' air, la deuxième zone formant une portion angulaire du conduit annulaire inférieure à 60° , préférentiellement inférieure à 30° , plus préférentiellement inférieure à 10° , de manière à permettre des déformations de dilatation du conduit.

Selon un mode avantageux de l'invention, la première zone du conduit annulaire forme un angle par rapport à l'axe de moins de 30°, préférentiellement de moins de 20°, plus préférentiellement de moins de 10° avec la position de l'entrée d'air.

Selon un mode avantageux de l'invention, le conduit annulaire est lié à l'enveloppe à une ou plusieurs positions sur la première zone et sur la deuxième zone, respectivement.

Selon un mode avantageux de l'invention, le conduit annulaire est libre de contact avec l'enveloppe circulaire à l'exception de la première zone et de la deuxième zone.

Selon un mode avantageux de l'invention, l'enveloppe circulaire comprend une surface interne délimitant la cavité, qui est libre de moyens de fixation du conduit annulaire sur plus de 120°, préférentiellement plus de 160°.

Selon un mode avantageux de l'invention, le conduit annulaire est lié à la première zone et à la deuxième zone par une ou plusieurs brides, ou une ou plusieurs plaques, s'étendant radialement et/ou axialement.

Selon un mode avantageux de l'invention, le conduit annulaire est lié par un ou plusieurs crochets entourant partiellement le conduit annulaire, et/ou lesdites liaisons sont des contacts radiaux.

Selon un mode avantageux de l'invention, l'enveloppe comprend une paroi circulaire interne s'étendant depuis le bord de séparation et apte à délimiter un flux primaire, et une paroi circulaire externe concentrique avec la paroi interne, s'étendant depuis le bord de séparation et apte à délimiter un flux secondaire, et au moins une cloison joignant radialement les parois interne et externe, le conduit étant lié à la première zone et à la deuxième zone au moins sur l'une desdites parois interne et externe, préférentiellement sur chacune desdites parois, et/ou sur la cloison.

Selon un mode avantageux de l'invention, la paroi interne comprend une virole externe destinée à recevoir des aubes radiales.

Selon un mode avantageux de l'invention, le bord de séparation est intégralement formé sur la paroi circulaire externe.

Selon un mode avantageux de l'invention, l'entrée d'air comprend un tube s'étendant transversalement au conduit annulaire et comprenant une peau ou comprenant une première peau extérieure et une deuxième peau intérieure concentrique à ladite peau, la ou au moins une des peaux, préférentiellement chacune des peaux, étant liée audit conduit.

Selon un mode avantageux de l'invention, le tube s'étend généralement parallèlement à l'axe de la turbomachine.

Selon un mode avantageux de l'invention, le tube est lié à l'enveloppe, préférentiellement par une bride.

Selon un mode avantageux de l'invention, le conduit annulaire comprend une série d'orifices de sortie pour la circulation d'air chaud dans la cavité annulaire, lesdits orifices étant répartis sur la circonférence du conduit, préférentiellement sur la totalité de la circonférence dudit conduit. Les orifices du conduit annulaire permettent de diffuser l'air chaud dans la cavité annulaire.

Selon un mode avantageux de l'invention, les orifices de sortie sont de section de passage croissante avec la distance de l'entrée d'air du conduit.

Selon un mode avantageux de l'invention, le conduit annulaire est de section circulaire ou ovale.

L'invention a également pour objet un compresseur de turbomachine axiale pour aéronef comprenant : un bec de séparation du flux d'air de la turbomachine en un flux primaire et en un flux secondaire ; un tuyau d'alimentation en air chaud ; remarquable en ce que le bec de séparation d'air est conforme à l'invention, l'entrée du conduit annulaire étant en communication avec le tuyau d'alimentation d'air chaud.

Selon un mode avantageux de l'invention, le tuyau d'alimentation comprend une paroi intérieure et une paroi extérieure, l'entrée du conduit annulaire étant connectée au tuyau d'alimentation au niveau de l'une desdites parois intérieure et extérieure.

Selon un mode avantageux de l'invention, le tube est lié au tuyau d'alimentation par une bride ou par soudage.

Selon un mode avantageux de l'invention, dans le sens normal de montage du compresseur, le bec de séparation comprend une partie supérieure et une partie inférieure, l'entrée du conduit annulaire étant située dans ladite partie supérieure.

Selon un mode avantageux de l'invention, le compresseur comprend une rangée annulaire d'aubes solidaires de la virole externe, le conduit annulaire étant préférentiellement disposé axialement au niveau de ladite rangée.

L'invention a également pour objet un bec de séparation de turbomachine axiale comprenant : une enveloppe annulaire formant une cavité annulaire et un bord de séparation circulaire ; un conduit annulaire de dégivrage disposé dans la cavité, ledit conduit comprenant une entrée d'air destinée à être branchée à un tuyau d'alimentation en air chaud de la turbomachine; remarquable en ce que les contacts, par exemple radiaux, entre le conduit et l'enveloppe sont réunies en deux zones diamétralement opposées, chacune parcourant moins de 60°, préférentiellement moins de 30°, plus préférentiellement moins de 10° du conduit annulaire, l'une des zone étant éventuellement formée par l'entrée ; ou le conduit est lié à l'enveloppe uniquement à une deuxième zone située à une position diamétralement opposée à ladite entrée et éventuellement à une première zone au niveau de l'entrée d'air, la deuxième zone parcourant moins de 60°, préférentiellement moins de 20°, plus préférentiellement moins de 10° du conduit, de manière à permettre des déformations de dilatation du conduit.

L'invention a également pour objet une turbomachine axiale pour aéronef comprenant un compresseur basse pression, remarquable en ce que le compresseur basse pression est conforme à l'invention ;

Selon un mode avantageux de l'invention, la turbomachine axiale comprend, en outre, un compresseur haute pression en aval du compresseur basse pression, le tuyau d'alimentation en air chaud du compresseur basse pression étant un tuyau d'alimentation en air chaud comprimé provenant du compresseur haute pression.

L'invention a également pour objet un conduit annulaire destiné à être disposé dans une cavité annulaire formée par une enveloppe circulaire de bec de séparation de turbomachine axiale, notamment de compresseur, ledit conduit comprenant une entrée destinée à être relié à un tuyau d'alimentation en air chaud, et des orifices pour la diffusion d'air chaud dans la cavité.

De manière générale, les modes avantageux de chaque objet de l'invention sont également applicables aux autres objets de l'invention. Les différents objets peuvent être entendus comme des interprétations différentes de l'invention. Dans la mesure du possible, chaque objet de l'invention est combinable aux autres objets.

### Avantages de l'invention

Les mesures de l'invention sont intéressantes en ce qu'elles facilitent la réalisation du bec de séparation. En effet, le conduit annulaire est lié à l'enveloppe sur deux zones opposées ce qui favorise la dilatation du conduit hors de ces zones et réduit les contraintes mécaniques au niveau des fixations et par conséquent les risques de rupture. La fabrication et l'entretien d'un tel bec sont par ailleurs plus économiques.

Le conduit annulaire présente deux tronçons diamétralement opposés libres de contact, qui s'étendent sur au moins 120° ou au moins 160°. En fonctionnement, la montée en température du tuyau entraine sa déformation par augmentation du diamètre ou par ovalisation. Les pôles étant maintenus, les côtés peuvent s'éloigner. Les contraintes thermiques et les contraintes mécaniques internes diminuent. Le tout repousse le risque de rupture, par exemple en cas d'ingestion ou de vibrations.

Avec des points de contact simplifiés, le bec devient plus simple à concevoir. Le montage bénéficie également de cet aspect. L'ensemble forme un montage souple puisqu'une seule bride suffit au maintien. Celle-ci permet de réguler la dilatation, éventuellement en la dirigeant.

### Brève description des dessins

La figure 1 est une vue simplifiée en coupe axiale d'une turbomachine axiale conforme à l'invention ;
La figure 2 est une vue simplifiée en coupe axiale d' un compresseur basse pression conforme à l'invention de la turbomachine de la figure 1 ;
La figure 3 est une vue schématique en coupe radiale d'un bec de séparation conforme à l'invention du compresseur de la figure 2 ;
La figure 4 est une vue simplifiée en coupe axiale du bec de séparation de la figure 3 ;

### Description d'un mode de réalisation

Dans la description qui va suivre, les termes intérieur ou interne et extérieur ou externe renvoient à un positionnement par rapport à l'axe de rotation d' une turbomachine axiale. La direction axiale correspond à la direction le long de l'axe de rotation de la turbomachine. La direction radiale est perpendiculaire à l'axe de rotation.

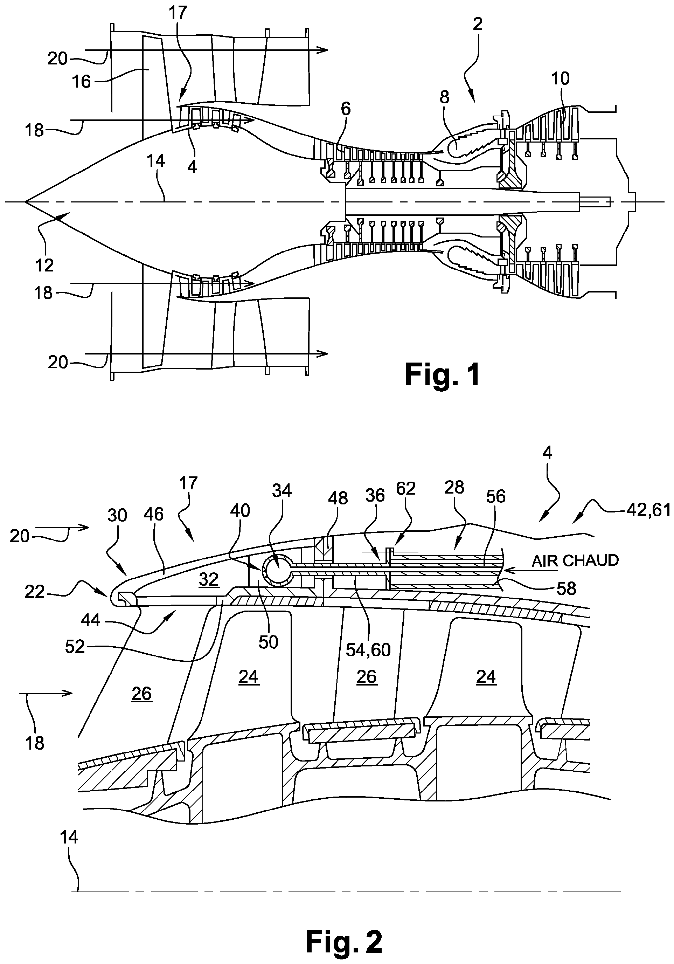

La figure 1 représente de manière simplifiée une turbomachine axiale 2 pour aéronef. Il s' agit dans ce cas d' un turboréacteur double-flux. Le turboréacteur 2 comprend un premier niveau de compression, dit compresseur basse pression 4, un deuxième niveau de compression, dit compresseur haute pression 6, une chambre de combustion 8 et un ou plusieurs niveaux de turbines 10. En fonctionnement, la puissance mécanique de la turbine 10 est transmise via un arbre central jusqu' à un rotor 12 qui met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer l'air progressivement jusqu' à l'entrée de la chambre de combustion 8. Le turboréacteur 2 comprend aussi un ventilateur d'entrée communément désigné fan ou soufflante 16 qui est couplé au rotor 12 et génère un flux d'air qui se divise au niveau d'un bec de séparation 17 en un flux primaire 18 traversant les différents niveaux susmentionnés du turboréacteur, et un flux secondaire 20 traversant une manche annulaire (partiellement représenté) le long du réacteur pour ensuite rejoindre le flux primaire en sortie de turbine et être accéléré de sorte à générer une poussée. Les flux primaire 18 et secondaire 20 sont des flux annulaires, ils sont canalisés par le carter du turboréacteur. De l'air chaud comprimé provenant du compresseur haute pression 6 alimente via un tuyau d'alimentation le bec de séparation. Cette alimentation en air chaud permet le dégivrage du bord de séparation 22 du bec de séparation 17.

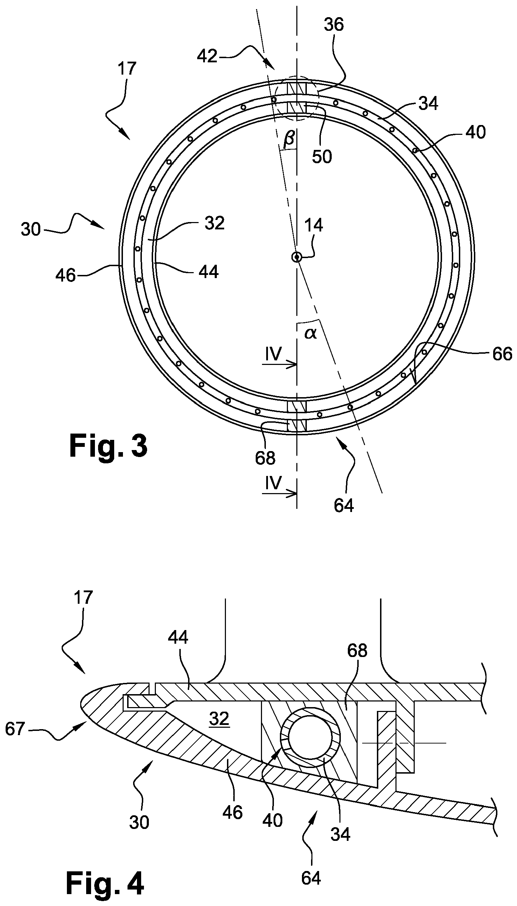

La figure 2 est une vue simplifiée en coupe axiale d'un compresseur basse pression 4 conforme à l'invention. Le compresseur comprend le bec de séparation 17 comme introduit en relation avec la figure 1, des aubes rotoriques 24 de paire avec des aubes statoriques 26 en aval du bec de séparation 17 pour la compression progressive du flux d'air primaire 18. Le compresseur comprend aussi le tuyau d'alimentation en air chaud 28 pour le dégivrage du bord de séparation 22 comme introduit en relation avec la figure 1. Le bec de séparation comprend une enveloppe annulaire 30 formant le bord de séparation 22 et une cavité annulaire 32 ; le bec de séparation comprend enfin un conduit annulaire 34 disposé dans la cavité annulaire 32. Le conduit annulaire 34 peut former une boucle fermée ou ouverte. Il comprend une entrée 36 en communication avec le tuyau d'alimentation en air chaud 28 et une sortie

formée par des orifices 40 pour diffuser l'air chaud dans la cavité 32 en vue de dégivrer le bord de séparation 22. On peut voir sur l'image un des orifices 40 réalisé sur le conduit annulaire et permettant la circulation de l'air chaud du conduit annulaire 34 dans la cavité 32. Le conduit 34 est lié à l'enveloppe 30 uniquement à une première zone 42 au niveau de l'entrée d'air et à une deuxième zone (non visible) située à une position diamétralement opposée à ladite entrée par rapport à l'axe 14 du turboréacteur de manière à permettre des déformations de dilatation du conduit. La figure 2 présente la première zone 42 du conduit annulaire. Nous verrons en relation avec les figures 3 et 4 les détails concernant la deuxième zone de liaison du conduit avec l'enveloppe. On peut observer que l'enveloppe 30 comprend une paroi circulaire interne 44, une paroi circulaire externe 46 et une cloison 48. La paroi circulaire interne 44 s'étend depuis le bord de séparation 22 et délimite le flux primaire 18 ; la paroi circulaire externe 46 est concentrique avec la paroi interne, s'étend depuis le bord de séparation et délimite le flux secondaire 20 ; la cloison 48 joint radialement les parois interne et externe 44 et 46. Dans le mode de réalisation ici illustré, le conduit annulaire 34 est lié au niveau de la première zone 42 sur chacune des parois interne et externe 44 et 46 par une plaque 50. Cette mesure ne limite cependant en rien l'invention, le conduit annulaire 34 peut être lié à l'enveloppe dans la première zone à l'une ou à l'autre des parois interne et externe 44 et 46. Le conduit 34 peut en plus ou bien en alternative être lié à la cloison 48. Dans le mode particulier ici présenté, la paroi interne 44 qui reçoit une rangée annulaire d'aubes radiales statoriques 26 du compresseur comprend une virole externe 52 sur laquelle est lié le conduit annulaire 34. Ce dernier peut être disposé axialement au niveau de la rangée annulaire d'aubes statoriques 26, en l'occurrence dans le mode de réalisation ici présenté, le conduit annulaire est situé axialement en arrière de la rangée d'aubes statoriques. Dans ce mode de réalisation particulier, le bord de séparation 22 est intégralement formé sur la paroi circulaire externe 46 de l'enveloppe 30 du bec de séparation. Cette mesure ne limite cependant en rien l'invention.

On peut observer le tuyau d'alimentation 28 en air chaud auquel est branchée l'entrée 36 du conduit annulaire 34. Ce dernier est en l'occurrence branché au tuyau via un tube 54 s'étendant transversalement au conduit annulaire. Dans le mode particulier de réalisation ici représenté, le tube 54 s'étend parallèlement à l'axe de la turbomachine en arrière du conduit annulaire. Le tube 54 peut être, en outre, lié à l'enveloppe, par exemple à la cloison 48, par une bride. Il peut être lié par soudage. Le tuyau d'alimentation 28 comprend une paroi intérieure 56 et une paroi extérieure 58 concentrique avec la paroi intérieure, l'air chaud circulant à l'intérieur de la paroi intérieure 56. Cette mesure de l'invention est intéressante pour rigidifier le tuyau, elle permet aussi d'isoler la liaison (non représentée) du tuyau au compresseur par rapport à la paroi intérieure 56 du tuyau qui est une paroi pouvant être chauffée par l'air chaud. Cette mesure ne limite cependant pas l'invention, dans un mode alternatif de réalisation, le tuyau 28 peut comprendre une unique paroi. Le tube 54 forme une peau 60 qui, sur un premier côté (à gauche sur l'image), est liée au conduit 34, et sur un deuxième côté (à droite sur l'image), est branché au tuyau 28 en l'occurrence au moyen d'une bride à vis 62. La peau 60 du tube est en communication avec la paroi 56 du tuyau formant le passage d'air chaud. Dans un mode de réalisation alternatif (non représenté), le tube formant l'entrée du conduit annulaire peut aussi comprendre une peau intérieure ainsi qu'une peau extérieure concentrique avec la peau intérieure ; l'une ou bien chacune des peaux pouvant être liée au conduit annulaire. On peut observer que le conduit annulaire 34 est de section circulaire, dans un mode alternatif de réalisation il peut être de section différente, selon l'espace disponible dans la cavité ; le conduit peut à titre d'exemple être de section ovale. Le conduit annulaire peut être essentiellement maintenu au niveau de la deuxième zone (non visible) et au niveau du tube 54 et/ou du tuyau 28, c'est-à-dire en aval du bec.

Le bec de séparation 17 du compresseur 4, lorsque ce dernier est monté dans le sens normal, comprend une partie supérieure 61 ainsi qu'une partie inférieure (non visible), l'entrée d'air 36 du conduit annulaire 34 est située en l'occurrence sur la partie supérieure 61 du bec de séparation 17. Dans un mode alternatif, l'entrée d'air 36 peut être située dans la partie inférieure du bec.

La figure 3 est une vue schématique en coupe radiale d'un bec de séparation 17 conforme à l'invention. On peut voir les parois interne et externe 44 et 46 de l'enveloppe 30 formant la cavité annulaire 32. On peut aussi voir le conduit annulaire 34 lié à l'enveloppe 30 sur la première zone 42 au niveau de l'entrée d'air 36 (en tirets interrompus) ainsi que sur la deuxième zone 64 située à une position qui est en l'occurrence diamétralement opposée par rapport à l'axe 14 du turboréacteur à la position de l'entrée d'air 36. La deuxième zone 64 peut former par rapport à l'axe 14 du turboréacteur un angle « *α* » de moins de 30°, préférentiellement de moins de 20°, plus préférentiellement encore de moins de 10° avec la position diamétralement opposée à l'entrée d'air. Par ailleurs, la première zone de fixation 42 du conduit annulaire 34 peut former un angle « *β* » par rapport à l'axe 14 de moins de 30°, préférentiellement de moins de 20°, plus préférentiellement de moins de 10° avec la position de l'entrée d'air 36. Par ailleurs, le conduit annulaire 34 peut être lié à l'enveloppe 30 à une ou plusieurs positions sur la première zone et sur la deuxième zone, respectivement.

On peut observer que le conduit annulaire 34 est libre de contact avec l'enveloppe circulaire 30 à l'exception des première et deuxième zones 42 et 64 ; plus précisément, la surface interne 66 délimitant la cavité 32 formée par l'enveloppe circulaire 30 est libre de moyens de fixation du conduit annulaire sur plus de 120°, préférentiellement plus de 160°. On peut voir sur le dessin la plaque de liaison 50 du conduit annulaire à l'enveloppe au niveau de la première zone 42. Le conduit annulaire est également lié à l'enveloppe par une plaque 68 sur la deuxième zone 64. Cette réalisation particulière de l'invention ne limite cependant en rien l'invention. Dans un mode de réalisation alternatif, le conduit annulaire peut être lié à l'enveloppe, dans la première et dans la deuxième zone par des moyens de fixation à vis ou bien à bride ou bien à crochet entourant partiellement le conduit. Ces moyens assurent essentiellement des liaisons à contacts radiaux. Dans le mode de réalisation particulier ou le conduit annulaire est lié à l'enveloppe sur des zones formant des angles « *α* » et « *β* », le conduit annulaire 34 peut être lié à l'enveloppe à plusieurs positions par exemple par plusieurs brides et/ou plusieurs plaques et/ou plusieurs crochets. Ces différentes solutions de liaison du conduit annulaire peuvent s'étendre radialement ou axialement.

On peut enfin voir sur le conduit annulaire 34 une série d'orifices 40 de sortie pour la circulation d'air chaud dans la cavité annulaire. Ces orifices sont répartis sur la totalité de la circonférence du conduit et sont de section de passage croissante avec la distance de l'entrée du conduit. Cette mesure est intéressante en ce qu'elle favorise l'uniformité de la diffusion d'air dans la cavité. Cette mesure ne limite cependant pas l'invention, ces orifices peuvent en alternative être situés sur une portion du conduit annulaire et être de section constante.

La figure 4 est une vue simplifiée en coupe axiale IV - IV du bec de séparation 17 au niveau de la deuxième zone de fixation 64 situé en l'occurrence dans la partie inférieure 67 du bec. On peut voir le conduit annulaire 34 lié par la plaque de liaison 68 sur chacune des parois interne 44 et externe 46. Dans un mode de réalisation alternatif, le conduit annulaire peut être lié à l'enveloppe 30 via l'une ou l'autre des parois interne et externe ; il peut en plus ou bien en alternative être lié à la cloison 48.

## Revendications

1. Bec de séparation (17) de turbomachine axiale (2), notamment de compresseur (4), ledit bec comprenant :
- une enveloppe annulaire (30) formant une cavité annulaire (32) et un bord de séparation circulaire (22) d'un flux d'air de la turbomachine ;
- un conduit annulaire (34) disposé dans la cavité annulaire (32),
∘ ledit conduit étant configuré pour dégivrer le bord de séparation (22) par circulation d'air chaud dans la cavité,
∘ ledit conduit comprenant une entrée d'air (36) destinée à être branchée à un tuyau d'alimentation (28) en air chaud de la turbomachine (2), ladite entrée d'air (36) formant notamment une première zone (42) sur le conduit annulaire (34);
**caractérisé en ce que**
le conduit (34) est lié à l'enveloppe (30) uniquement dans une deuxième zone (64); diamétralement opposée à l'entrée d'air (36), et au niveau de l'entrée d'air (36), la deuxième zone (64) formant une portion angulaire du conduit annulaire (34) inférieure à 30°, préférentiellement inférieure à 10°, de manière à permettre des déformations de dilatation du conduit (34).

2. Bec de séparation (17) selon la revendication 1, **caractérisé en ce que** l'enveloppe circulaire (30) comprend une surface interne (66) délimitant la cavité (32), qui est libre de moyens de fixation du conduit annulaire sur plus de 120°, préférentiellement plus de 160°.

3. Bec de séparation (17) selon l'une des revendications 1 à 2, **caractérisé en ce que** le conduit annulaire (34) est lié à la première zone (42) et à la deuxième zone (64) par une ou plusieurs brides, ou une ou plusieurs plaques, s'étendant radialement et/ou axialement.

4. Bec de séparation (17) selon l'une des revendications 1 à 3, **caractérisé en ce que** le conduit annulaire (34) est lié par un ou plusieurs crochets entourant partiellement le conduit annulaire (34), et/ou lesdites liaisons sont des contacts radiaux.

5. Bec de séparation (17) selon l'une des revendications 1 à 4, **caractérisé en ce que** l'enveloppe (30) comprend une paroi circulaire interne (44) s'étendant depuis le bord de séparation (22) et apte à délimiter un flux primaire (18), et une paroi circulaire externe (46) concentrique avec la paroi interne, s'étendant depuis le bord de séparation et apte à délimiter un flux secondaire (20), et au moins une cloison (48) joignant radialement les parois interne et externe, le conduit étant lié à la première zone (42) et à la deuxième zone (64) au moins sur l'une desdites parois interne et externe, préférentiellement sur chacune desdites parois, et/ou sur la cloison.

6. Bec de séparation (17) selon la revendication 5, **caractérisé en ce que** la paroi interne (44) comprend une virole externe (52) destinée à recevoir des aubes radiales (26).

7. Bec de séparation (17) selon l'une des revendications 1 à 6, **caractérisé en ce que** l'entrée d'air (36) comprend un tube (54) s'étendant transversalement au conduit annulaire et comprenant une peau (60) ou comprenant une première peau extérieure et une deuxième peau intérieure concentrique à ladite peau, la ou au moins une des peaux, préférentiellement chacune des peaux, étant liée audit conduit.

8. Bec de séparation (17) selon la revendication 7, **caractérisé en ce que** le tube (54) s'étend généralement parallèlement à l'axe de la turbomachine.

9. Bec de séparation (17) selon l'une des revendications 7 à 8, **caractérisé en ce que** le tube (54) est lié à l'enveloppe (30), préférentiellement par des moyens de fixation à vis ou à bride, ou éventuellement par soudage.

10. Compresseur (4) de turbomachine axiale pour aéronef comprenant :
- un bec de séparation (17) du flux d'air de la turbomachine en un flux primaire (18) et en un flux secondaire (20) ;
- un tuyau d'alimentation en air chaud (28) ;
**caractérisé en ce que** le bec de séparation d'air (17) est selon l'une des revendications 1 à 9, l'entrée (36) du conduit annulaire (34) étant en communication avec le tuyau d'alimentation d'air chaud (28).

11. Compresseur (4) selon la revendication 10, **caractérisé en ce que** le tuyau d'alimentation (28) comprend une paroi intérieure (56) et une paroi extérieure (58), l'entrée (36) du conduit annulaire étant connectée au tuyau d'alimentation (28) au niveau de l'une desdites parois intérieure et extérieure.

12. Compresseur (4) selon l'une des revendications 10 à 11, **caractérisé en ce que** dans le sens normal de montage le bec de séparation (17) comprend une partie supérieure (61) et une partie inférieure (67), l'entrée (36) du conduit annulaire étant située dans ladite partie supérieure.

13. Compresseur (4) selon l'une des revendications 10 à 12, **caractérisé en ce que** le bec de séparation (17) est selon la revendication 6, le compresseur comprenant une rangée annulaire d'aubes (26) solidaire de la virole externe (52), le conduit annulaire étant préférentiellement disposé axialement au niveau de ladite rangée.

14. Turbomachine axiale (2) pour aéronef comprenant un compresseur basse pression (4), **caractérisé en ce que** le compresseur basse pression est selon l'une des revendications 10 à 13.

15. Turbomachine axiale (2) selon la revendication 14, **caractérisé en ce qu'**elle comprend, en outre, un compresseur haute pression (6) en aval du compresseur basse pression (4), le tuyau d'alimentation en air chaud (28) du compresseur basse pression (4) étant un tuyau d'alimentation en air chaud comprimé provenant du compresseur haute pression (6).

## Patentansprüche

1. Trennschnabel (17) einer axialen Turbomaschine (2), insbesondere eines Kompressors (4), umfassend:
- ein ringförmiges Gehäuse (30), das einen ringförmigen Hohlraum (32) sowie eine kreisförmige Trennkante (22) eines Luftstroms der Turbomaschine bildet;
- eine im ringförmigen Hohlraum (32) angeordnete ringförmige Leitung (34), wobei
∘ die Leitung für die Enteisung der Trennkante (22) durch Zirkulation von Heißluft im Hohlraum konfiguriert ist,
∘ die Leitung (34) einen Lufteinlass (36) umfasst, der für den Anschluss an ein Zulaufrohr (28) für die Heißluft der Turbomaschine (2) vorgesehen ist, der Lufteinlass (36) bildet einen ersten Bereich (42) auf der ringförmigen Leitung (34);
**dadurch gekennzeichnet, dass** die Leitung (34) mit dem Gehäuse (30) nur an einem zweiten Bereich (64), diametral gegenüberliegend vom Lufteinlass, (36) und beim Lufteinlass (36) gebunden ist, der zweite Bereich einen abgewinkelten Abschnitt der ringförmigen Leitung (34); geringer als 30°, vorzugsweise geringer als 10°, bildet, um Ausdehnungsverformungen der Leitung (34) zu erlauben.

2. Der Trennschnabel (17) gemäß Anspruch 1, **dadurch gekennzeichnet, dass** das kreisförmige Gehäuse (30) eine den Hohlraum (32) begrenzende Innenfläche (66) umfasst, wobei die Innenfläche frei von Befestigungsmitteln der ringförmigen Leitung bei mehr als 120°, vorzugsweise mehr als 160°, ist.

3. Der Trennschnabel (17) gemäß einem der Ansprüche 1 bis 2, **dadurch gekennzeichnet, dass** die ringförmige Leitung (34) mit dem ersten Bereich (42) sowie mit dem zweiten Bereich (64) durch einen oder mehrere Flansche, oder eine oder mehrere Platten, die sich radial und/oder axial erstrecken, gebunden ist.

4. Der Trennschnabel (17) gemäß einem der Ansprüche 1 bis 3, **dadurch gekennzeichnet, dass** die ringförmige Leitung (34) durch einen oder mehrere Haken, welche die ringförmige Leitung (34) teilweise umgeben, und/oder durch radiale Kontakte gebunden ist.

5. Der Trennschnabel (17) gemäß einem der Ansprüche 1 bis 4, **dadurch gekennzeichnet, dass** das Gehäuse (30) eine Kreisinnenwand (44), die sich von der Trennkante (22) erstreckt, um einen Primärstrom (18) zu begrenzen, und eine Kreisaußenwand (46), konzentrisch zu der Innenwand und sich von der Trennkante (22) erstreckend, um einen Sekundärstrom (20) zu begrenzen, und mindestens eine Trennwand (48), welche die Innen- und die Außenwand radial verbindet, umfasst, wobei die Leitung mit dem ersten Bereich (42) und dem zweiten Bereich (64) durch mindestens eine dieser Innen- und Außenwände, vorzugsweise durch jede dieser Wände und/oder den Haken, gebunden ist.

6. Der Trennschnabel (17) gemäß Anspruch 5, **dadurch gekennzeichnet, dass** die Innenwand (44) einen externen Ring (52) für die Aufnahme der radialen Schaufeln (26) umfasst.

7. Der Trennschnabel (17) gemäß einem der Ansprüche 1 bis 6, **dadurch gekennzeichnet, dass** der Lufteinlass (36) ein Rohr (54) umfasst, das sich quer zur ringförmigen Leitung erstreckt und eine Haut (60) oder eine erste äußere Haut und eine zweite innere Haut konzentrisch zu dieser Haut aufweist, wobei die oder mindestens eine der Häute, vorzugsweise jede der Häute, mit der Leitung gebunden ist.

8. Der Trennschnabel (17) gemäß Anspruch 7, **dadurch gekennzeichnet, dass** sich das Rohr (54) allgemein parallel zur Achse der Turbomaschine erstreckt.

9. Der Trennschnabel (17) gemäß einem der Ansprüche 7 bis 8, **dadurch gekennzeichnet, dass** das Rohr (54) mit dem Gehäuse (30) gebunden ist, vorzugsweise durch Befestigungsmittel wie Schrauben oder Flansche oder eventuell durch Schweißung.

10. Kompressor (4) einer axialen Turbomaschine für ein Luftfahrzeug, umfassend:
- einen Trennschnabel (17) des Luftstroms der Turbomaschine aufgeteilt in einen Primärstrom (18) und einen Sekundärstrom (20);
- ein Zulaufrohr für Heißluft (28);
**dadurch gekennzeichnet, dass** der Trennschnabel (17) gemäß einem der Ansprüche 1 bis 9 ist, der Einlass (36) der ringförmigen Leitung (34) steht in Verbindung mit dem Zulaufrohr für Heißluft (28).

11. Der Kompressor (4) gemäß Anspruch 10, **dadurch gekennzeichnet, dass** das Zulaufrohr (28) eine Innenwand (56) und eine Außenwand (58) umfasst, der Einlass (36) der ringförmigen Leitung mit dem Zulaufrohr (28) an einer dieser Innen- und Außenwände gebunden ist.

12. Der Kompressor (4) gemäß einem der Ansprüche 10 bis 11, **dadurch gekennzeichnet, dass** der Trennschnabel in Bezug auf seine normale Montagerichtung (17) einen oberen Teil (61) und einen unteren Teil (67) umfasst, der Einlass (36) der ringförmigen Leitung innerhalb dieser beiden Teile liegt.

13. Der Kompressor (4) gemäß einem der Ansprüche 10 bis 12, **dadurch gekennzeichnet, dass** der Trennschnabel (17) gemäß Anspruch 6 ist, der Kompressor umfassend eine ringförmige Reihe von Schaufeln (26), die am äußeren Ring (52) verankert sind, die ringförmige Leitung vorzugsweise an diese Reihe axial angeordnet ist.

14. Axiale Turbomaschine (2) für Luftfahrzeuge, die einen Niederdruckkompressor umfasst (4), **dadurch gekennzeichnet, dass** der Niederdruckkompressor gemäß einem der Ansprüche 10 bis 13 ist.

15. Die axiale Turbomaschine (2) gemäß Anspruch 14, **dadurch gekennzeichnet, dass** diese außerdem einen Hochdruckkompressor (6) stromabwärts vom Niederdruckkompressor (4) umfasst, das Zulaufrohr der Heißluft (28) des Niederdruckkompressors (4) dient als Zulaufrohr von komprimierter Heißluft, die vom Hochdruckkompressor (6) stammt.

## Claims

1. A splitter nose (17) of an axial turbomachine (2), preferably of a compressor (4), the splitter nose comprising:
- an annular casing (30) which forms an annular cavity (32) and a circular separation edge (22) of an air flow of the turbomachine;
- an annular conduit (34) which is arranged in the annular cavity (32),
∘ the annular conduit being configured in order to deice the separation edge (22) by circulation of hot air in the cavity, and
∘ the conduit comprising an air inlet (36) which is intended to be connected to a hot air supply pipe (28) of the turbomachine (2), said air inlet (36) forming a first zone (42) on the annular conduit (34);
**characterized in that**
the conduit (34) is linked to the casing (30) only in a second zone (64), diametrically opposite the air inlet (36), and in the region of the air inlet (36), the second zone (64) forming an angular portion of the annular conduit (34) which is less than 30°, preferably less than 10°, so as to allow expansion deformations of the conduit (34).

2. The splitter nose (17) of Claim 1, **characterized in that** the circular casing (30) comprises an internal surface (66) which delimits the cavity (32), which is free from fixation means of the annular conduit over more than 120°, preferably over more than 160°.

3. The splitter nose (17) of one of Claims 1 to 2, **characterized in that** the annular conduit (34) is linked to the first zone (42) and to the second zone (64) by one or more flanges, or one or more plates, extending radially and axially.

4. The splitter nose (17) of one of Claims 1 to 3, **characterized in that** the annular conduit (34) is linked by one or several hooks which partially surround the annular conduit (34), and/or by radial contacts.

5. The splitter nose (17) of one of Claims 1 to 4, **characterized in that** the casing (30) comprises an internal circular wall (44) which extends from the separation edge (22) and which is able to delimit a primary flow (18), and an external circular wall (46) which is concentric with the internal wall and which extends from the separation edge and which is able to delimit a secondary flow (20), and at least one partition wall (48) which radially joins the internal and external walls, the conduit being linked to the first zone (42) and the second zone (64) at least over one of the internal and external walls, preferably over each of said walls, and/or over the partition wall.

6. The splitter nose (17) of Claim 5, **characterized in that** the internal wall (44) comprises an outer shroud (52) configured for receiving an annular row of stator radial vanes (26).

7. The splitter nose (17) of one of Claims 1 to 6, **characterized in that** the air inlet (36) comprises a tube (54) which extends transversely to the annular conduit and which comprises a skin (60) or a first external skin and a second internal skin which is concentric with the first external skin, the skin or each of the skins being linked to the conduit.

8. The splitter nose (17) of Claim 7, **characterized in that** the tube (54) generally extends parallel with the axis of the turbomachine.

9. The splitter nose (17) of one of Claims 7 to 8, **characterized in that** the tube (54) is linked to the casing (30), preferably by fixation means comprising a screw or a flange, or possibly by welding.

10. A compressor (4) of an axial turbomachine for an aircraft, comprising
- a splitter nose (17) for splitting an air flow of the turbomachine into a primary flow (18) and a secondary flow (20);
- a hot air supply pipe (28);
**characterized in that** the splitter nose (17) is according to one of Claims 1 to 9, the inlet (36) of the annular conduit (34) being in communication with the hot air supply pipe (28).

11. The compressor (4) of Claim 10, **characterized in that** the supply pipe (28) comprises an internal wall (56) and an external wall (58), the inlet (36) of the annular conduit being connected to the supply pipe (28) in the region of one of the internal and external walls.

12. The compressor (4) of one of Claims 10 to 11, **characterized in that** in the normal direction of assembly, the splitter nose (17) comprises an upper portion (61) and a lower portion (67), the inlet (36) of the annular conduit being located in the upper portion.

13. The compressor (4) of one of Claims 10 to 12, **characterized in that** the splitter nose (17) is according to claim 6, and the compressor comprises an annular row of vanes (26) which are rigidly fixed to the outer shroud (52), the annular conduit being preferably arranged axially in the region of said row.

14. An axial turbomachine (2) for an aircraft, comprising a low-pressure compressor (4), **characterized in that** the low-pressure compressor is according to one of Claims 10 to 13.

15. The axial turbomachine (2) of Claim 14, **characterized in that** it further comprises a high-pressure compressor (6) downstream of the low-pressure compressor (4), the hot air supply pipe (28) of the low-pressure compressor (4) being a supply pipe (28) of compressed hot air originating from the high-pressure compressor (6).
